**Europäisches Patentamt**

**European Patent Office**

**Office européen des brevets**

(11) Veröffentlichungsnummer: **0 562 458 A1**

# EUROPÄISCHE PATENTANMELDUNG

(21) Anmeldenummer: **93104435.8**

(22) Anmeldetag: **18.03.93**

(51) Int. Cl.5: **D03D 1/02**, D03D 15/12, B60R 21/16

(30) Priorität: **25.03.92 DE 4209628**
**05.02.93 DE 4303345**

(43) Veröffentlichungstag der Anmeldung:
**29.09.93 Patentblatt 93/39**

(84) Benannte Vertragsstaaten:
**BE DE ES FR GB IT NL PT SE**

(71) Anmelder: **AKZO N.V.**
**Velperweg 76**
**NL-6824 BM Arnhem(NL)**

(72) Erfinder: **Krummheuer, Wolf Rüdiger, Dr.**
**Jägerhofstrasse 86**
**W-5600 Wuppertal 1(DE)**
Erfinder: **Siejak, Volker**
**Angerstrasse 1**
**W-4100 Duisburg(DE)**

(74) Vertreter: **Fett, Günter et al**
**Akzo Patente GmbH, Postfach 10 01 49**
**D-42097 Wuppertal (DE)**

(54) **Technische Gewebe mit hoher Temperaturbeständigkeit.**

(57) Für Technische Gewebe, die bevorzugt unbeschichtet sind, eine hohe Temperaturbeständigkeit und eine über die titerabhängige Auswahl der Fadenzahl sowie über eine Schrumpfauslösung in einem Naßverfahren gezielt eingestellte Luftdurchlässigkeit aufweisen, wird der Einsatz eines Garnes aus Polytetramethylenadipamid mit einem Titer von 200 - 500 dtex und einem Einzelfilamenttiter < 7 dtex beschrieben. Die hergestellten Gewebe haben eine Luftdurchlässigkeit < 100 l/dm$^2 \cdot$min. Sie bieten, besonders bei der Verwendung für die Herstellung von Airbags, eine hohe Sicherheit gegen thermisches Versagen.

EP 0 562 458 A1

Die Erfindung betrifft Technische Gewebe mit hoher Temperaturbeständigkeit und über die titerabhängige Auswahl der Fadenzahl sowie über eine Schrumpfauslösung in einem Naßverfahren gezielt eingestellter Luftdurchlässigkeit.

Bei Technischen Geweben wird in einigen Einsatzgebieten neben einer gezielt eingestellten Luftdurchlässigkeit vor allem eine gute Hitzebeständigkeit gefordert. Dies gilt zum Beispiel bei Geweben für die Heißgasfiltration und in besonderem Maße für Airbaggewebe.

Die für Airbags verwendeten Gewebe müssen eine Reihe sehr wichtiger Forderungen erfüllen. Bisher wurden bevorzugt beschichtete Gewebe mit sehr niedriger Luftdurchlässigkeit zur Herstellung von Airbags eingesetzt. In neuerer Zeit finden vermehrt unbeschichtete Gewebe für Airbags Einsatz. In besonderem Maße ist die Luftdurchlässigkeit bei diesen Geweben eine wichtige Eigenschaft. Diese soll für den Kontaktteil des Airbags, also den Teil, auf den das von einem Generator erzeugte Gas beim Auslösen der Airbagfunktion auftrifft, mit < 10 l/dm$^2 \cdot$min sehr niedrig sein. Um aber dem eingeströmten Gas auch die Möglichkeit des dosierten partiellen Entweichens zu bieten, müssen die Seitenteile des Airbags eine höhere Luftdurchlässigkeit aufweisen. Für diese als Filterteil bezeichneten Gewebeflächen werden, je nach Fahrzeugtyp, Luftdurchlässigkeiten zwischen 40 und 100 l/dm$^2 \cdot$min verlangt.

Neben der genannten, gezielt eingestellten Luftdurchlässigkeit, werden für Airbaggewebe im Interesse eines möglichst geringen Raumbedarfs beim Unterbringen des Airbags im Fahrzeug, zum Beispiel im Lenkrad, weiter eine gute Faltbarkeit und eine geringe Gewebedicke gefordert. Zur Gewährleistung einer optimalen Funktion des Airbagsystems muß die Masse des Gewebes so niedrig wie möglich gehalten werden. Eine geringe Masse des Gewebes wirkt sich vor allem bei sogenannten Out-of-position-Unfällen, d.h. daß sich der Fahrer oder Beifahrer während der Kollision nicht in der normalen Sitzhaltung befindet, positiv aus. Der Impuls des explosionsartig aufgeblasenen Airbags auf den Fahrzeuginsassen wird bei niedrigerer Masse des Gewebes geringer und damit wird ein sanfteres Auffangen des Fahrzeuginsassen durch den Airbag möglich. Eine weitere Anforderung betrifft eine hohe Festigkeit des Airbaggewebes, die in beiden Geweberichtungen gleich sein muß.

Ein besonderes Problem ist bei Airbags das thermische Versagen des Gewebes. Hierunter versteht man an- oder durchgeschmolzene Gewebestellen, durch die das in den Airbag eingeflossene Gas unkontrolliert entweichen kann und die eventuell das Austreten glühender Partikel in den Fahrgastraum ermöglichen, wodurch Brandverletzungen der Fahrzeuginsassen erfolgen können. Solche Durchbrenner entstehen durch heiße, teilweise glühende Partikel, die sich beim explosionsartigen Zünden des zur Gaserzeugung eingesetzten Generators bilden. Die Partikel gelangen mit dem zum Aufblasen benötigten Gas in den Airbag und können hier einzelne Stellen des Airbaggewebes an- oder durchschmelzen.

Eine besondere Problemstelle bildet hierbei der Nahtbereich des Airbags. Auf Grund der beim Aufblasen an diesen Stellen auftretenden Spannungen besteht die Gefahr, daß an den Nahteinstichstellen in verstärktem Maße heiße Gase durchströmen und somit hier das Airbaggewebe besonders thermisch belasten.

Zur Lösung dieses Problems wird in DE-A 21 59 449 eine Wärmeabsorption durch eine Folienbeschichtung der Innenseite des Airbags oder das Einbringen einer Einlage in den Airbag vorgeschlagen. Neben den bei diesem Verfahren stark erhöhten Herstellungskosten ergeben Airbags dieser Art den gravierenden Nachteil eines hohen Raumbedarfes auf Grund der durch die Beschichtung mit einer Folie oder einer entsprechenden Einlage stark erhöhten Gewebedicke und eines damit hohen Packungsvolumens. Darüberhinaus neigen aufeinander eng aufliegende Folien, was beim Lagern des zusammengefalteten Airbags im Lenkrad eines Fahrzeugs unumgänglich ist, zum Verkleben. Diesem Verkleben kann durch Bepudern mit Talkum entgegengewirkt werden. Beim Auslösen der Airbagfunktion führt dieses Talkum dann zu einem dichten Nebel im Fahrgastraum, da es mit dem aus dem Airbag entweichendem Gas in diesen gelangt. Eine erhebliche Belästigung und starke Sichtbehinderung der Fahrzeuginsassen ist die Folge hiervon.

In USA 38 14 458 wird vorgeschlagen, die Wärmeabsorption durch eine aluminiumisierte Neopren-Beschichtung zu verbessern. Hier gelten ebenfalls die vorn erwähnten Nachteile wie hohe Herstellungskosten des Airbags, hoher Platzbedarf für das Unterbringen des Airbags im Fahrzeug sowie eine erhebliche Belästigung der Fahrzeuginsassen beim Auslösen der Airbagfunktion durch das für das Bepudern der Beschichtung benötigte Talkum.

In DE-C 36 44 554 wird das Einnähen eines Filtergewebes aus aromatischen Polyamidfasern in den Airbag vorgeschlagen. Diese Faserart besitzt eine gute Temperaturbeständigkeit und bietet somit ausreichenden Schutz vor thermischem Versagen des Gewebes. Hier entsteht aber nur ein Schutz gegen glühende Partikel an dem, im Vergleich zur Gesamtfläche des Airbags, relativ kleinem Filtergewebe. Die anderen Gewebeteile des Airbags bleiben ungeschützt. Ein weiterer Nachteil von Airbags der hier vorgeschlagenen Ausführungsform sind die hohen Herstellungskosten sowie ein nicht recyclinggerechtes Mehrstoffsystem.

Für die Herstellung von Airbaggeweben werden normalerweise Polyester- oder Polyamidfasern eingesetzt. Bei ersteren handelt es sich üblicherweise um Fasern auf Basis von Polyethylenterephthalat, bei letzteren werden Fasern aus Polyamid 6.6 (Polyhexamethylenadipamid) bevorzugt. Sowohl Polyester- als auch Polyamid 6.6-Fasern können Durchbrenner nicht ausreichend verhindern. Deshalb bestanden Überlegungen, Fasern mit höherer thermischer Widerstandsfähigkeit zur Herstellung von Airbaggeweben einzusetzen. Gewebe aus diesen Fasern erfüllen aber nicht alle anderen an unbeschichtete Airbaggewebe zu stellenden Forderungen wie hohe Festigkeit und geeignete Schrumpfeigenschaften, die zur Herstellung eines unbeschichteten dichten Gewebes mit niedriger Luftdurchlässigkeit erforderlich sind, um auf zusätzliche kostenungünstige Ausrüstungsverfahren verzichten zu können. Darüberhinaus haben hochtemperaturbeständige Fasern den Nachteil eines sehr hohen Rohstoffpreises.

In JP-A 01 - 104 848 und in JP-A 64 - 041 438 werden neben einer hohen Zahl von Polymeren für synthetische Fasern, die für die Herstellung von beschichteten Airbaggeweben in Frage kommen können, auch Polymere, die Fasern mit hoher thermischer Beständigkeit ergeben, erwähnt. Die beiden genannten Patentpublikationen geben jedoch keine Lehre, wie ein unbeschichtetes Airbaggewebe mit guter thermischer Beständigkeit hergestellt werden muß.

Es bestand deshalb die Aufgabe, ein Technisches Gewebe mit gezielt eingestellter Luftdurchlässigkeit zur Verfügung zu stellen, das unbeschichtet sein soll und das auch alle anderen, an Gewebe dieser Art zu stellenden Forderungen wie zum Beispiel hohe Festigkeit und gute Faltbarkeit erfüllt und das darüberhinaus auf Grund einer ausreichend hohen Wärmekapazität einen guten Schutz gegen thermisches Versagen bietet und das mit ungefähr gleichen Herstellungskosten wie die bislang eingesetzten Gewebe aus Polyamid 6.6- oder Polyester-Garnen produziert werden kann. Außerdem bestand die Forderung, diese Aufgabe mit einem recyclinggerechten Einstoffsystem zu lösen.

Überraschend wurde nun gefunden, daß diese Aufgabe gelöst wird, wenn als Fasermaterial Polytetramethylenadipamid zum Einsatz kommt.

Fasern aus Polytetramethylenadipamid sind bekannt. Sie zählen zu den aliphatischen Polyamid-Fasern. Teilweise sind für diese Faserart auch die Bezeichnungen Polyamid 4.6 oder Nylon 4.6 gebräuchlich. Sie werden, wie die anderen aliphatischen Polyamid-Fasern, nach bekannten Schmelzspinnverfahren ersponnen. Wenn in den folgenden Ausführungen von Polytetramethylenadipamid-Fasern gesprochen wird, so sind hierunter sowohl Fasern aus 100 % dieses Polymeren als auch Fasern aus Copolymeren, deren Hauptanteil von Polytetramethylenadipamid gebildet wird, zu verstehen.

In den Fasereigenschaften wie Festigkeit, Dehnung und Schrumpfverhalten unterscheiden sich diese Fasern nur unwesentlich von den bislang für Airbaggewebe sehr häufig eingesetzten Polyamid 6.6 (Polyhexamethylenadipamid)-Fasern. Ihr besonderer Vorteil ist jedoch ein Schmelzpunkt von 290 °C. Im Vergleich dazu liegt der Schmelzpunkt von Polyesterfasern (Polyethylenterephthalat) bei ca. 255 °C und von Polyamid 6.6 (Polyhexamethylenadipamid)-Fasern ebenfalls bei ca. 255 °C. Die hohe Temperaturbeständigkeit bietet bei Airbags, die aus Geweben aus Polytetramethylenadipamid-Garnen hergestellt wurden, einen wirkungsvollen Schutz gegen thermisches Versagen.

Die für die Herstellung von erfindungsgemäßen Technischen Geweben eingesetzten Polytetramethylenadipamid-Garne haben einen Titer von 200 - 500 dtex und einen Einzelfilamenttiter unter 7 dtex. Bevorzugt werden Garne mit 235, 350 oder 470 dtex. Die Zahl der Einzelfilamente beträgt beispielsweise bei einem Titer von 235 dtex 36, was einem Einzelfilamenttiter von 6.5 dtex entspricht. Ein Garn mit einem Titer von 470 dtex hat zum Beispiel 72 Einzelfilamente, was ebenfalls einem Einzelfilamenttiter von 6.5 dtex entspricht.

Bei einem Garn von 350 dtex sind 72 Einzelfilamente üblich. Hier ergibt sich ein Einzelfilamenttiter von 4.9 dtex. Weitere geeignete Garne haben bei einem Garntiter von 235 dtex 72 Einzelfilamente, was einem Einzelfilamenttiter von 3,3 dtex entspricht, bei einem Garntiter von 350 dtex 94 Einzelfilamente (Titer der Einzelfilamente 3,7 dtex) oder bei einem Garntiter von 470 dtex 104 Einzelfilamente (Titer der Einzelfilamente 4,5 dtex). Die Auswahl des Garn- und des Einzelfilamenttiters richtet sich nach den gewünschten Eigenschaften der Gewebe. So wird mit höheren Titern eine hohe Festigkeit erzielt, niedrigere Titer ergeben dagegen den besonderen Vorteil geringer Gewebedicke und guter Faltbarkeit der hergestellten Gewebe.

Die entsprechenden Garne haben eine Festigkeit von mindestens 60 cN/tex und eine Bruchdehnung von 15 - 30 %. Bei der Einstellung der Schrumpfdaten erfolgt eine Abstimmung auf das vorgesehene Einsatzgebiet. Für Gewebe, für die eine sehr niedrige Luftdurchlässigkeit gefordert wird, wie Kontaktgewebe für Airbags (die geforderte Luftdurchlässigkeit ist hier < 10 l/dm$^2$•min), kommen beispielsweise Garne mit einem Heißluftschrumpf von 7 - 10 % (gemessen bei 190 °C) zum Einsatz. Bei Filtergeweben für Airbags liegen die gewünschten Luftdurchlässigkeiten bei 40 - 100 l/dm$^2$•min. Für die Herstellung dieser Gewebe sind zum Beispiel Heißluftschrumpfwerte von 2 - 4 % (gemessen bei 190 °C) geeignet.

Die über die Fadenzahlen einstellbare Gewebedichte richtet sich nach der gewünschten Luftdurchlässigkeit. Die Fadenzahlen müssen in Abhängigkeit vom Garntiter gewählt werden. So sind bei einem Garntiter 235 dtex Fadenzahlen von 26 - 30/cm, bei einem Garntiter 350 dtex Fadenzahlen von 18 - 28/cm und bei einem Garntiter 470 dtex Fadenzahlen von 18 - 25/cm üblich.

Als Gewebebindung findet bevorzugt eine Leinwandbindung Anwendung. Für feinere Titer kann, im Interesse eines ansprechenden Warengriffes, auch eine Panamabindung 2/2 gewählt werden. Für Gewebe mit höherer Luftdurchlässigkeit können von der Leinwandbindung abweichende Gewebebindungen, die zu einer Verbesserung der Nahtschiebefestigkeit führen, vorteilhaft sein. Als Beispiele seien hierfür Kreuzköper- oder Panamabindungen genannt.

Die Gewebeeinstellung soll symmetrisch sein, dies heißt, daß Kette und Schuß wenigstens im wesentlichen gleiche Fadenzahlen aufweisen sollen. Die symmetrische Einstellung der Gewebe gestattet es, die Forderungen nach in Kette und Schuß gleichen Festigkeiten auf einfache Weise zu erfüllen. Diese Forderung wird besonders von den Automobilherstellern bei Airbags erhoben, da es sich beim Airbag um ein radialsymmetrisches Bauteil ohne Vorzugsrichtung handelt.

Die Herstellung der Gewebe kann auf in der Webereitechnik üblichen Webmaschinen, soweit sie die Möglichkeit der Realisierung relativ hoher Fadenzahlen bieten, erfolgen. Besonders geeignet sind hierfür Greiferwebmaschinen.

Die so hergestellten Gewebe werden einer Naßbehandlung in einem wäßrigen Bad bei Behandlungstemperaturen zwischen 60 und 140 °C unterzogen. Besonders bevorzugt wird ein Temperaturbereich von 90 - 95 °C. Für diese Behandlung eignet sich ein Jigger, aber auch andere, in der Textilveredlungsindustrie übliche Maschinen können zum Einsatz kommen.

Die Trocknung erfolgt bei 130 - 170 °C, bevorzugt bei 140 - 160 °C. Es sind aber auch höhere Temperaturen bis 190 °C möglich. Als Maschine für die Trocknung ist beispielsweise ein Spannrahmen geeignet.

So hergestellte Gewebe aus Polytetramethylenadipamid-Garnen erfüllen voll die an Airbaggewebe und an Gewebe für die Heißgasfiltration zu stellenden Forderungen.

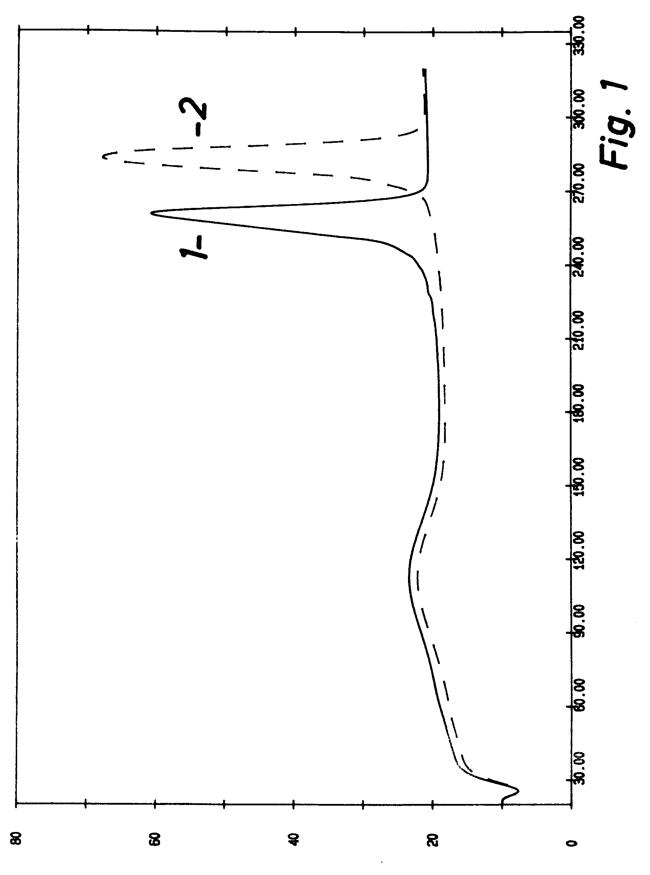

Fig. 1 zeigt den Verlauf der DSC-Kurve (DSC heißt Differential Scanning Calorimetrie) von Polytetramethylenadipamid (Polyamid 4.6) im Vergleich zu Polyhexamethylenadipamid (Polyamid 6.6). Auf der Abszisse sind die Temperaturen in °C aufgetragen. Die Ordinate zeigt den Wärmefluß in mW (Milliwatt). Die Aufheizrate betrug bei dieser Prüfung 40 °C pro Minute. Die Kurve 1 gibt das thermische Verhalten von Polyamid 6.6 (Polyhexamethylenadipamid), die Kurve 2 das thermische Verhalten von Polyamid 4.6 (Polytetramethylenadipamid) wieder. Beide Polymere ergeben beim Aufheizen einen weitgehend gleichartigen Verlauf der Kurven. Dies läßt auf einen nahezu gleichen Verlauf der Kurve für die spezifische Wärme $c_p$ (T) schließen. Daraus folgt, daß sich der im Vergleich zu Polyhexamethylenadipamid höhere Schmelzpunkt des Polytetramethylenadipamid in einer deutlichen Verbesserung der thermischen Beständigkeit auswirkt, da zum Erwärmen von Polytetramethylenadipamid, ausgehend von der Umgebungstemperatur bis zum Schmelzpunkt, wesentlich mehr Wärmeenergie benötigt wird als zur entsprechenden Temperaturbehandlung von Polyhexamethylenadipamid.

Gewebe aus Polytetramethylenadipamid-Garnen bieten somit vor allem einen ausgezeichneten Schutz gegen thermisches Versagen, wie auch Tests beim vergleichenden Aufblasen von Airbags aus Polytetramethylenadipamid-Fasern, aus Polyamid 6.6 (Polyhexamethylenadipamid)-Fasern bzw. aus Polyesterfasern gezeigt haben. Bei einer gegebenen Kombination von Gasgenerator und Gewebekonstruktion lassen Gewebe aus Polyhexamethylenadipamid-Garnen beim Funktionstest bei einer Modul- und Gewebetemperatur von 85 °C bereits deutliche Spuren einer die Funktion gefährdenden thermischen Belastung erkennen (unter Modul ist im vorliegenden Fall das Gehäuse für die Unterbringung des Airbags zu verstehen). Gleiches gilt für Gewebe aus Polyesterfasern. Im Vergleich dazu zeigen Gewebe aus Polytetramethylenadipamid-Garnen bei diesem Test keine erkennbaren Spuren einer thermischen Belastung.

In gleicher Weise hat sich gezeigt, daß auch Gewebe für die Heißgasfiltration, die aus Polytetramethylenadipamid-Fasern hergestellt wurden, auf Grund der besseren Temperaturbeständigkeit eine höhere Einsatzzeit erlauben als Gewebe aus bisher verwendeten Fasern.

Ein besonderer Vorteil von Geweben aus Polytetramethylenadipamid-Fasern ergibt sich dadurch, daß die hohe Wärmemenge dieser Gewebe die Reduzierung der Masse durch Verringerung des Garntiters oder durch den Einsatz niedrigerer Fadenzahlen bei der Gewebeherstellung ermöglicht. Diese wirkt sich nicht nur in geringeren Produktionskosten aus, sondern die Sicherheit beim Auffangen eines Fahrzeuginsassen im Falle einer Kollision wird dadurch auch erhöht. Die reduzierte Masse der Airbaggewebe aus Polytetramethylenadipamid-Fasern führt einmal zu einem geringeren Platzbedarf beim Unterbringen des Airbags, zum Beispiel im Lenkrad eines Fahrzeugs, zum anderen aber auch zu einem sichereren Auffangen der Fahrzeuginsassen durch den Airbag im Falle einer Kollision. Der beim explosionsartigen Aufblasen des Airbags auf die Fahrzeuginsassen durch den Airbag ausgelöste Impuls wird bei einer niedrigeren Gewebemasse geringer, was sich besonders in Form eines sanfteren Auffangens dann auswirkt, wenn sich der Fahrer oder Beifahrer in einer sogenannten Out-of-position-Situation, also nicht in normaler Sitzhaltung, befindet.

Die oben gemachten Angaben zeigen, daß Airbags aus Polytetramethylenadipamid-Fasern eine erhöhte Sicherheit für den Fahrzeuginsassen im Hinblick auf ein sicheres Auffangen im Falle einer Kollision bieten, da die in den Airbag eingeflossene Luft nicht unkontrolliert und ungefiltert entweichen kann und keine heißen Partikel Verletzungen der Fahrzeuginsassen auslösen können. Ein Airbagsystem, das einen aus Polytetramethylenadipamid-Garnen hergestellten Airbag enthält, bietet also gegenüber den bisherigen Systemen den erheblichen Vorteil einer höheren Sicherheit für die Fahrzeuginsassen. Unter Airbagsystem ist der Airbag selbst, die Unterbringung des Airbags im Kraftfahrzeug sowie das Steuerungssystem zum Auslösen der Airbag-Funktion zu verstehen.

Ausführungsbeispiel 1

Ein Polytetramethylenadipamid-Filamentgarn mit einem Garntiter von 235 dtex und einer Filamentzahl von 36, was einem Filamenttiter von 6,5 dtex entspricht, wurde in Leinwandbindung zu einem Airbag-Kontaktgewebe verarbeitet. Die Sollfadenzahl betrug in Kette und Schuß je 30/cm. Das eingesetzte Garn hatte einen Heißluftschrumpf von 7,8 % (gemessen bei 190 °C).

Das Gewebe wurde einer Naßbehandlung auf einem Jigger bei 95 °C unterzogen und anschließend bei 150 °C getrocknet. Die Trocknungszeit betrug 30 sec.

Das so hergestellte Gewebe zeigte eine Luftdurchlässigkeit von 6,9 l/dm$^2\cdot$min bei 500 Pa Prüfdifferenzdruck.

Vergleichsbeispiel 1

Im Unterschied zu Beispiel 1 wurde hier ein herkömmliches Filamentgarn aus Polyamid 6.6 (Polyhexamethylenadipamid) zur Herstellung eines Airbaggewebes eingesetzt. Der Garntiter war ebenfalls 235 dtex und die Filamentzahl ebenfalls 36. Diese Garne wurden mit einer Sollfadenzahl von 30/cm in Leinwandbindung zu einem Airbag-Kontaktgewebe verarbeitet. Das eingesetzte Garn hatte einen Heißluftschrumpf von 7,4 % (gemessen bei 190 °C).

Die Behandlung des Gewebes entsprach der in Beispiel 1 beschriebenen.

Hierbei wurde ein Gewebe mit einer Luftdurchlässigkeit von 7,4 l/dm$^2\cdot$min erhalten.

Wie die nachstehende Tabelle zeigt, ergaben sich in den Gewebedaten keine nennenswerten Unterschiede zwischen den aus Polytetramethylenadipamid-Garnen und den aus Polyhexamethylenadipamid-Garnen hergestelllten Geweben.

|  | Beispiel 1 | Vergleichsbeispiel 1 |
|---|---|---|
| Polymer | Polytetramethylen-adipamid | Polyhexamethylen-adipamid |
| Fadenzahl/cm | | |
| Kette | 30,2 | 30,8 |
| Schuß | 30,7 | 29,1 |
| Flächengewicht | | |
| g/m² | 166,3 | 165,7 |
| Gewebedicke mm | 0,262 | 0,258 |
| Höchstzugkraft N | | |
| Kette | 2050 | 2075 |
| Schuß | 2070 | 1945 |
| Höchstzugkraft-dehnung % | | |
| Kette | 39,2 | 39,6 |
| Schuß | 37,7 | 29,7 |
| Weiterreißfestig-keit N (Trapezmethode) | | |
| Kette | 247,2 | 251,0 |
| Schuß | 244,3 | 224,6 |

Dieser Vergleich mit Geweben aus Polyamid 6.6 (Polyhexamethylenadipamid)-Garnen zeigt, daß durch Einsatz von Polytetramethylenadipamid-Garnen die bislang bei Airbaggeweben bekannten und geforderten Gewebedaten voll erfüllt werden können. Der Vorteil der besseren Beständigkeit gegen thermisches Versagen bei Airbaggeweben aus Polytetramethylenadipamid-Garnen kommt also ohne Beeinträchtigung anderer Eigenschaften voll zur Geltung.

Ausführungsbeispiel 2

Beispiel 1 wurde wiederholt, wobei ein Garn mit dem Titer 350 dtex und einer Filamentzahl von 72, was einem Filamenttiter von 4,9 dtex entspricht, eingesetzt wurde. Entsprechend dem gegenüber Beispiel 1 höheren Garntiter betrug die Sollfadenzahl in Kette und Schuß je 25/cm. Das eingesetzte Garn hatte einen Heißluftschrumpf von 8,7 %. Die Behandlung des Gewebes entsprach derjenigen von Beispiel 1.

Das so hergestellte Gewebe zeigte eine Luftdurchlässigkeit von 5,7 l/dm²·min bei 500 Pa Prüfdifferenzdruck.

Ausführungsbeispiel 3

Beispiel 1 wurde wiederholt, wobei ein Garn mit dem Titer 470 dtex und einer Filamentzahl von 72, was einem Filamenttiter von 6,5 dtex entspricht, eingesetzt wurde. Entsprechend dem gegenüber Beispiel 1 höheren Garntiter betrug die Sollfadenzahl in Kette und Schuß je 22/cm. Das eingesetzte Garn hatte einen Heißluftschrumpf von 8,2 % Die Behandlung des Gewebes entsprach derjenigen von Beispiel 1.

Das so hergestellte Gewebe zeigte eine Luftdurchlässigkeit von 7,4 l/dm$^2 \cdot$min bei 500 Pa Prüfdifferenzdruck.

Ausführungsbeispiel 4

Beispiel 1 wurde wiederholt, wobei ein Garn mit dem Titer 350 dtex und einer Filamentzahl von 94, was einem Filamenttiter von 3,7 dtex entspricht, eingesetzt wurde. Entsprechend dem gegenüber Beispiel 1 höheren Garntiter betrug die Sollfadenzahl in Kette und Schuß je 25/cm. Das eingesetzte Garn hatte einen Heißluftschrumpf von 8,1 %. Die Behandlung des Gewebes entsprach derjenigen von Beispiel 1.

Das so hergestellte Gewebe zeigte eine Luftdurchlässigkeit von 4,6 l/dm$^2 \cdot$min bei 500 Pa Prüfdifferenzdruck.

Ausführungsbeispiel 5

Zur Herstellung eines Airbag-Filtergewebes, für das gegenüber Airbag-Kontaktgeweben deutlich höhere Luftdurchlässigkeiten gefordert werden, kam ein Garn mit dem Titer 470 dtex und einer Filamentzahl von 72 zum Einsatz. Um die bei Filtergeweben gewünschte höhere Luftdurchlässigkeit einzustellen, fand hier ein Garn mit einem Heißluftschrumpf von 3,2 % (gemessen bei 190 °C) Verwendung. Weiter wurde, im Vergleich zu Beispiel 3, wo die Herstellung eines Kontaktgewebes mit einem Garn gleichen Titers beschrieben wird, die Sollfadenzahl in Kette und Schuß auf 16/cm zurückgesetzt. Die Behandlung dieses Gewebes entsprach ebenfalls der in Beispiel 1 beschriebenen.

Das so hergestellte Gewebe ergab eine Luftdurchlässigkeit von 87 l/dm$^2 \cdot$min bei 500 Pa Prüfdifferenzdruck.

Alle gemäß Ausführungsbeispielen 1 - 5 hergestellten Gewebe zeigten beim Funktionstest, im Gegensatz zu dem Gewebe aus Vergleichsbeispiel 1, bei einer Gewebetemperatur von 85 °C keine Spuren einer thermischen Belastung.

**Patentansprüche**

1.  Technische Gewebe mit hoher Temperaturbeständigkeit und über die titerabhängige Auswahl der Fadenzahl sowie über eine Schrumpfauslösung in einem Naßverfahren gezielt eingestellter Luftdurchlässigkeit, dadurch gekennzeichnet, daß die Gewebe aus Multifilamentgarnen aus Polytetramethylenadipamid bestehen, wobei die Garne einen Titer von 200 - 500 dtex und einen Einzelfilamenttiter < 7 dtex aufweisen und daß die Gewebe eine Luftdurchlässigkeit < 100 l/dm$^2 \cdot$min aufweisen.

2.  Technische Gewebe nach Anspruch 1, dadurch gekennzeichnet, daß die Gewebe unbeschichtet sind.

3.  Verwendung der Gewebe nach mindestens einem der Ansprüche 1 - 2 für die Filtration von heißen Gasen.

4.  Verwendung der Gewebe nach mindestens einem der Ansprüche 1 - 2 für die Herstellung von Airbags.

5.  Airbag, hergestellt aus mindestens einem Gewebe nach mindestens einem der Ansprüche 1 - 2.

6.  Airbagsystem mit einem Airbag nach Anspruch 5.

Fig. 1

Europäisches Patentamt

**EUROPÄISCHER RECHERCHENBERICHT**

Nummer der Anmeldung

EP    93 10 4435

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 436 950 (AKZO) <br> * das ganze Dokument * <br> --- | 1,2,4-6 | D03D1/02 <br> D03D15/12 <br> B60R21/16 |
| D,Y | PATENT ABSTRACTS OF JAPAN <br> vol. 13, no. 225 (M-830)(3573) 25. Mai 1989 <br> & JP-A-10 41 438 ( ASAHI ) <br> * Zusammenfassung * <br> & JP-A-64 041 438 (...) <br> --- | 1,2,4-6 | |
| P,X | DATABASE WPIL <br> Week 9234, <br> Derwent Publications Ltd., London, GB; <br> AN 92-281852 <br> & JP-A-4 194 048 (TORAY) <br> * Zusammenfassung * <br> --- | 1,2,4-6 | |
| A | EP-A-0 442 373 (HOECHST) <br> * Zusammenfassung * <br> --- | 1,2,4-6 | |
| A | DE-A-4 009 611 (STRÄHLE & HESS) <br> * das ganze Dokument * | 3 | RECHERCHIERTE SACHGEBIETE (Int. Cl.5) |
| | ----- | | D03D <br> B60R |

Der vorliegende Recherchenbericht wurde für alle Patentansprüche erstellt

| Recherchenort | Abschlußdatum der Recherche | Prüfer |
|---|---|---|
| DEN HAAG | 01 JULI 1993 | BOUTELEGIER C.H.H. |